# EUROPEAN PATENT APPLICATION

(11) **EP 4 746 068 A1**
(43) Date of publication of application: **20.05.2026**
(21) Application number: 24212882.5
(22) Date of filing: 14.11.2024
(51) Int. Cl.: H01M 4/36, H01M 4/133, H01M 4/134, H01M 4/38, H01M 4/587

(54) **ELECTROCHEMICAL ENERGY STORAGE DEVICE**

(71) Applicant: Cellforce Group GmbH, 72138 Kirchentellinsfurt (DE)
(72) Inventor: SOMMER, Heino, 72138 Kirchentellinsfurt (DE); GRAF, Maximilian, 72138 Kirchentellinsfurt (DE); VON KOLZENBERG, Lars, 72138 Kirchentellinsfurt (DE); WEINBERGER, Manuel, 72138 Kirchentellinsfurt (DE)
(74) Representative: Michalski Hüttermann & Partner Patentanwälte mbB

(57) **Abstract**

The present invention relates to an energy storage device (100), at least comprising
- an anode (110);
- a cathode (120);
- a separator (130) disposed between the cathode (120) and the anode (110); and
- an electrolyte (140) comprising lithium ions;
wherein the anode (110) comprises a silicon-carbon composite material (10); characterized in that,
the anode (110) has a silicon content in the range of ≥ 9 wt.-% to ≤ 50 wt.-%, based on the total weight of the anode (110); and the electrochemical energy storage device (100) has a ratio N/P, between an areal capacity of the anode (110) N and an areal capacity of the cathode (120) P, in the range of ≥ 1.1 to ≤ 1.5.

## Description

### Field of the invention

The present invention relates to an electrochemical energy storage device, such as a secondary battery. In particular, the present invention relates to an electrochemical storage device which comprises an anode comprising a silicon carbon composite material and a specific N/P-ratio of anode and cathode. The present invention further relates the use of an anode in such an electrochemical storage device and an electrically driven vehicle comprising such an electrochemical energy storage device.

### Background

Electrochemical energy storage devices are widely known in the art. Particularly in view of the advancing electrification of vehicles, electrochemical energy storage devices are becoming increasingly important. With this regard, especially the charging time as well as the cycle stability becomes more important to gain better acceptance in the market. More specifically, discharge capacity retention is of high importance for retaining the value of electric vehicles.

Due to the rapidly increasing importance of electrochemical energy storage devices, in particular Li-ion batteries, there is a continuous need for further development and improvement in the field of formation of such devices.

When designing electrochemical energy storage devices, it is generally recognized that the capacity of anodes and cathodes should be adapted to each other in order to optimize the capacity of the device between charged and discharged state. Usually, a capacity ratio between anode and cathode of about 1 is desired, wherein small deviations from the ideal ratio are indicated depending on the chemistry of the electrochemical energy storage devices to compensate side reactions of the electrolyte with the electrodes. Generally these deviations are kept minimal in order to not reduce the overall capacity of the storage device.

Based on the above, it is an object of the present invention to overcome at least one disadvantage of the prior art, at least partially. It is particularly an object of the present invention to provide an electrochemical energy storage device which shows good cycling stability and long lifetime. Specifically, it is an object of the present invention to provide an electrochemical energy storage device with improved discharge capacity retention, reduced swelling and/or reduced breathing.

This object is solved by the electrochemical energy storage device having the features of claim 1. This object is further solved by the use of claim 14 and an electrically driven vehicle having the features of claim 15. Preferred embodiments of the invention are described in the dependent claims and the following description, each of which may individually or in combination represent an aspect of the invention unless explicitly excluded. Where a feature is shown in combination with another feature, this is for simplified illustration of the invention only and is in no way intended to imply that this feature cannot be a further feature of the invention without the other feature.

### Summary of the Invention

The present invention provides an electrochemical energy storage device, at least comprising
- an anode;
- a cathode;
- a separator disposed between the cathode and the anode; and
- an electrolyte comprising lithium ions;

wherein the anode comprises a silicon-carbon composite material; characterized in that,
the anode has a silicon content in the range of ≥ 9 wt.-% to ≤ 50 wt.-%, based on the total weight of the anode; and the electrochemical energy storage device has a ratio N/P, between an areal capacity of the anode N and an areal capacity of the cathode P, in the range of ≥ 1.1 to ≤ 1.5.

It has surprisingly been found that such an electrochemical energy storage device shows good cycling stability and long lifetime. Specifically, such an electrochemical energy storage device shows improved discharge capacity retention, reduced swelling and/or reduced breathing. Swelling may refer to the gradual and usually irreversible increase in the battery's physical dimensions such as thickness over multiple charge/discharge cycles, Breathing may refer to the reversible expansion and contraction of the battery during charge and discharge cycles. Without being bound to a theory, swelling and breathing of the particular anodes as used in the electrochemical storage device of the present invention depends on the capacity of the anode such that using the entire capacity of the anode is outweighed by reducing the swelling and breathing of the anode. Furthermore, the improved discharge capacity retention may be achieved without drawbacks in capacity or volume of the electrochemical energy storage device. It has been found that the volume expansion (cause by breathing as well as swelling) of the electrochemical energy storage device may also be reduced when compared to a device with lower N/P, allowing for an overall more compact cell design, relative to the thickness of the electrodes required for the N/P ratio. The resulting electrochemical energy storage device according to the present invention may therefore have a similar capacity to an electrochemical energy storage device with a lower N/P and the same volume, particularly after multiple charge/discharge cycles.

The term silicon carbon composite material may also be referred to as silicon-carbon composite mixture, which may be understood as combination of silicon- and carbon-based materials.

The silicon content of the anode according to the present invention may refer to the content of silicon atoms in the anode, irrespective of the chemical environment of the silicon. Silicon content may be measured according to various methods known in the art, for example using EDX or WDX, SIMS, or gravimetric methods.

For example, the silicon content may be measured thermogravimetrically as disclosed in US 11,335,903 B2. For this, the material may be heated from 25°C to 1100°C, which, without being bound by theory, provides for burn-off of all carbon, and oxidation of all silicon to SiO2. Thus, the wt.-% silicon content in the material such as the anode or the silicon-carbon composite material can be calculated as % Si = 100 [[M¹¹⁰⁰ (28/(28+(16*2)))]/M°, wherein M¹¹⁰⁰ is the mass of the material at 1100°C and M° is the minimum mass of the material between 30°C and 200°C during heating.

The areal capacity of the anode and the cathode according to the present invention may refer to the capacity of the corresponding electrode per unit area, i.e. it refers to the amount of electric charge that can be stored in the electrode with reference to the area of the electrode (in contrast to for example the volume of the electrode, taking into account the thickness of the electrode.

According to one embodiment of the present invention the areal capacity is the first charge areal capacity. A first charge areal capacity according to the present invention refers to the areal capacity of the corresponding electrode as measured during a first charge cycle. It is to be understood that the first charge areal capacity analogously also refers to the first discharge capacity.

According to one embodiment of the present invention, the areal capacity is the retained areal capacity, particularly the areal capacity after the first charge/discharge cycle or the first couple of charge/discharge cycles, e.g. after the first 10 cycles. The retained areal capacity thereby takes into account the capacity lost during the first couple of charge/discharge cycles and represents the capacity that is mostly present during the use of the electrochemical energy storage device. This lost capacity may for example be due to irreversible processes that occur, such as formation of a solid electrolyte interphases or mechanical degradation of the electrodes due to larger volume changes during the initial cycles.

It is to be understood that the retained areal capacity may be lower than the first charge areal capacity, for example about 5-15% lower. Generally, the retained areal capacity of the anode may be lower than the first charge areal capacity of the anode by about the same amount as the retained areal capacity of the cathode may be lower than the first charge areal capacity of the cathode. Accordingly, the ratio N/P of the electrochemical energy storage device may be about the same when referring to the first charge areal capacity and the retained areal capacity.

The areal capacity according to the present invention may be measured by measuring the capacity of the respective electrode in a 2-electrode half-cell vs. a Lithium electrode and dividing the resulting capacity by the area of the corresponding electrode. The capacity of the cathode may be measured by charging the cathode from 2.0 V to 4.3 V at 25 °C with a current of C/10 (CCCV). The capacity of the anode may be measured by charging the anode from 1.2 V to 0.005 V at 25°C with a current of C/10 (CCCV).

According to one preferred embodiment, the ratio N/P is in the range of ≥ 1.12 to ≤ 1.45, preferably ≥ 1.16 to ≤ 1.40, more preferably ≥ 1.18 to ≤ 1.35, more preferably ≥ 1.2 to ≤ 1.3, more preferably ≥ 1.22 to ≤ 1.28, more preferably ≥ 1.24 to ≤ 1.26, for example 1.25.

According to one preferred embodiment, the anode has a silicon content in the range of ≥ 10 wt.-% to ≤ 49 wt.-%, preferably ≥ 15 wt.-% to ≤ 48 wt.-%, more preferably ≥ 20 wt.-% to ≤ 47 wt.-%, more preferably ≥ 25 wt.-% to ≤ 46 wt.-%, more preferably ≥ 30 wt.-% to ≤ 42 wt.-%, more preferably ≥ 35 wt.-% to ≤ 40 wt.-%.

According to one preferred embodiment, the electrochemical energy storage device is configured so that at 100% state of charge SOC of the electrochemical energy storage device, the anode has a charge capacity in the range of ≥ 50 % to ≤ 100 % of its maximum charge capacity (anode usage), preferably in the range of ≥ 55 % to ≤ 95 %, more preferably ≥ 60 % to ≤ 90 %, more preferably ≥ 65 % to ≤ 85 %, more preferably ≥ 70 % to ≤ 80 %, for example 75%.

According to one preferred embodiment, the electrochemical energy storage device is configured so that the anode has a difference between its thickness at an SOC of 0% and an SOC of 100% (anode expansion) in the range of ≥ 10 % to ≤ 300% based on the thickness at an SOC of 0%, preferably in the range of ≥ 10 % and ≤ 100%, more preferably in the range of ≥ 20 % and ≤ 50%.

According to one preferred embodiment, the electrochemical energy storage comprises a cell stack of anodes, cathodes, and separators, wherein the device is configured so that the cell stack a cell stack has a difference between its thickness at an SOC of 0% and an SOC of 100% (cell stack expansion) in the range of ≥ 1 % to ≤ 20% based on the thickness at an SOC of 0%, preferably in the range of 2 and 10%, more preferably in the range of 3 and 5%.

It has particularly been found that configuring the electrochemical energy storage device with respect to anode usage, anode expansion, and/or cell stack expansion particularly may increases the discharge capacity retention. This may also allow for cells that are adapted with less swelling compensation, allowing for comparably thinner stack based on the overall thickness of anodes and cathodes.

According to one preferred embodiment, the electrochemical energy storage device has a capacity after 400 C/3 charge-discharge cycles in the range of ≥ 70 % to ≤ 100% based on the capacity of the electrochemical energy storage device after the first C/3 charge discharge cycle.

C/3 with respect to the charge-discharge cycle according to the present invention refers to the rate at which the energy storage device is charged or discharged. Particularly, C/3 refers to charging and discharging the energy storage device at a rate depending on the overall capacity of the energy storage device, so that the device is charged or discharged within 3 hours.

In the following, further preferred embodiments are described which particularly specify the anode and further components of the electrochemical energy storage device according to the present invention. For embodiments with these components, providing the required N/P ratio has been shown to be particularly beneficial. Without being bound to a theory, anodes according to these particular embodiments provide particular swelling properties for which providing the required N/P ratio yield particularly improved discharge capacity retention.

According to one preferred embodiment, the anode further comprises at least one carbon compound, preferably selected from graphite (such as anisometric flake graphite), carbon black, and carbon nanotubes.

According to one preferred embodiment, the anode further comprises binder.

According to one preferred embodiment, the anode comprises the silicon-carbon composite material; at least one carbon compound, preferably selected from graphite (such as anisometric flake graphite), carbon black, and carbon nanotubes; and a binder.

According to one embodiment, the anode comprises graphite, in particular anisometric flake graphite, in the amount of ≥ 2 wt.-% to ≤ 45 wt.-%, relating to the anode, carbon nanotubes in the amount of > 0 wt.-% to < 1 wt.-%, relating to the anode; and a binder, in particular a polymer binder, in the amount of 0.5 wt.-% to 6 wt.-%, relating to the anode. In one preferred embodiment, the anode comprises binder in the amount of 0.5 wt.-% to 4 wt.-%.

The above-named components may sum up to 100 wt.-% relating to the anode.

The materials, such as in particular the silicon-carbon composite material, graphite (such as anisometric flake graphite), carbon nanotubes, and binder, may form the anode and are provided on a metal foil which may be considered as current collector, in order to form the final anode electrode for an electrochemical storage device.

According to one preferred embodiment, the anode comprises the silicon-carbon composite material in an amount in the range of ≥ 20 wt.-% to ≤ 100 wt.-%, based on the anode. An amount relating to the anode shall generally mean an amount which relates to the anode material, i.e. to the material which is coated on the current collector. Preferably the anode comprises the silicon-carbon composite material in an amount in the range of ≥ 20 wt.-% to ≤ 98 wt.-%, relating to the anode, preferably ≥ 30 wt.-% to ≤ 98 wt.-%, more preferably ≥ 40 wt.-% to ≤ 97 wt.-%, more preferably ≥ 45 wt.-% to ≤ 96 wt.-%, more preferably ≥ 61 to ≤ 90% wt.-%, more preferably ≥ 70 wt.-% to ≤ 88 wt.-%, more preferably ≥ 75 wt.-% to ≤ 86 wt.-%, and more preferably in the range of ≥ 77 wt.-% to ≤ 85 wt. -%.

The carbon from the silicon-carbon composite material refers to a material or substance consisting of carbon or at least comprising carbon. In this regard, a carbon material may comprise high purity, amorphous and crystalline materials. A carbon may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. Such a porous carbon offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio like described in more detail below.

In one further embodiment, the carbon is a hard carbon material, a graphitic carbon, or a oxide containing compound. For example, the oxide containing compound is a silicon oxide (SiO₂). Alternatively, a oxide containing compound is a titanium oxide (TiO₂), a tin oxide (SnO₂), or other oxides. A hard carbon material is a non-graphitizable carbon material. A hard carbon offers the advantage that it remains amorphous at elevated temperatures (typically > 1500 °C), whereas a "soft" carbon crystallizes and becomes graphite.

In one embodiment, the carbon may be a modified hard carbon. A modified hard carbon is a composite material comprising both a carbon, in particular a hard carbon, and a lithium alloy material. A lithium alloy material may be silicon, tin, germanium, nickel, aluminum, manganese, alumina (Al₂O₃), titanium, titanium oxide, sulphur, molybdenum, arsenic, gallium, phosphorus, selenium, antimony, bismuth, tellurium or indium or any other metal or metalloid capable of absorbing lithium.

The silicon of the silicon-carbon composite material may be a pure silicon or a material composition comprising silicon. For example, the silicon portion may be at least one alloy. An alloy may be a silicon-titanium alloy (Si-Ti), a silicon iron alloy (Si-Fe), a silicon nickel alloy (Si-Ni). In a further embodiment, the silicon portion may consist of P-dopants, As-dopants or N-dopants. A P-dopant is usually a phosphorus dopant, an As-dopant is usually an arsenic dopant and an N-dopant is usually a nitrogen dopant.

The presence of silicon in the silicon carbon composite material may be advantageous as in general, silicon comprises a significantly higher energy density than, e.g., graphite. For example, the energy density of silicon exceeds the energy density of graphite by a factor of ten.

It may further be provided that the anode comprises additionally to the described silicon carbon composite material a further silicon-carbon composite material being different to the first silicon carbon composite material. In a further embodiment, the anode may comprise a further carbon and/or a further binder like described below. The at least one further carbon and/or the at least one binder may be dissolved in an aqueous medium. A further carbon may be a hard carbon material or a graphitic carbon or a oxide containing compound as described above.

The anode according to the invention may further comprise graphite, wherein graphite preferably is present in an anisometric flake form. According to the present invention, an anisometric flake graphite shall in the broadest sense mean that the graphite is fully unsymmetrical or at least has unsymmetrical parts. Further, a flake form shall comprise each of flaky small, flaky large and ultraflaky as outlined below.

Preferably, anisometric flake graphite may be defined by at least one of the following properties, for example by two or by all of the following properties:
- a particle size diameter (PSD), defined as D90 by laserdiffraction, in the range of ≥ 3 µm to ≤ 50 µm;
- a tap density, derivable by DIN EN ISO 787-11, ASTM B527, in the range of 0,05 to 0,5 g/cm³; and/or
- the specific surface area by nitrogen adsorption (SSA BET), derivable by ASTM C1069, ISO 9277:2022, in the range of ≥ 5 to ≤ 35 m²/g.

Further, anisometric graphite may have a crystallinity, determined as LC value by the x-ray diffraction method, in the range of ≥ 90 nm, such as ≥ 100 nm for small particles and such as ≥ 150 nm for large particles.

The particle size diameter, the tap density and the specific surface area may further be divided in three ranges within the before-defines ranges, thereby being distinct with regard to size. These values are shown in table 1 in which the respective values are compared to respective values of generally uses round or rounded graphite particles.

All ranges may as such form a feature of the present invention, wherein different two or three of the properties particle size diameter, tap density and specific surface area may also be combined.

Flaky graphite may also be free of any coating provided on the respective particles, which is in contrast to round graphite particles known from the prior art.

Further, the anode as described may comprise carbon nanotubes in an amount of > 0 wt.-% to ≤ 1 wt.-%, such as in the amount of ≥ 0.05 wt.-% to ≤ 2 wt.-%, for example, in the amount of ≥ 0.8 wt.-% to ≤ 1,5 wt.-%, relating to the anode

The carbon nanotubes can be described as an allotrope of carbon with a diameter in the range of 2 to 5 nanometer, for example, having a hollow structure and a high aspect ratio (length/diameter ratio) of about 200 to 5000. Carbon nanotubes such as single wall carbon nanotube (SW-CNT) can exhibit remarkable electrical conductivity. SW-CNT can be grown on silicon substrates using a chemical vapor deposition (CVD) method and represent electrically uniform arrays of single-walled carbon nanotubes. In some embodiments the single wall carbon nanotube as provided as suspension in water with some stabilizing polymers.

With regard to the suspension, these allow an especially easy processing as suspensions of carbon nanotubes in water for a very homogeneous solution.

Further, a binder may be present in the anode as described, for example in the amount of ≥ 0.5 wt.-% to ≤ 6 wt.-%, preferably ≥ 0.5 wt.-% to ≤ 4 wt.-%, such as in the amount of ≥ 0.8 wt.-% to ≤ 3 wt.-%, for example in the amount of ≥ 0.8 wt.-% to ≤ 2 wt.-% relating to the anode. A binder in a manner known per se is a binding agent or binding material. A binder thus refers to a material that can hold together individual components, in particular particles, of a substance, for example a carbon and the silicon-carbon composite material. A binder is typically arranged such that when particles are brought together with a corresponding binder, a cohesive mass is formed which can be further shaped into a new form.

The binder may be configured to bind all compounds as present in the anode, such as in particular, the particularly carbon and the silicon content of the first silicon-carbon composite, the graphite and the carbon nanotubes. In a further embodiment, the binder is adapted to bind further materials to at least one of the respective silicon-carbon composites. Thus, a binder is generally arranged to hold together the components of the silicon-carbon composite mixture and optionally further carbon materials of the electrode which may be formed as an anode.

The anode may comprise at least two binders, wherein a first binder is arranged to bind the particularly carbon and the silicon-carbon portion of the first silicon-carbon composite and the particularly porous carbon and the silicon portion of the at least one further silicon-carbon composite, and wherein the at least one further binder is arranged to bond the first silicon-carbon composite to the at least one further silicon-carbon composite.

Optionally, the silicon-carbon composite material comprises at least one further binder adapted to bond the first material component and the at least one further material component together.

For example, the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA). In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. However, it is especially preferred that the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA).

Generally, the binder may be used in an organic solution or in a water-based solution.

The silicon-carbon composite mixture, or respectively the silicon-carbon composite material, may be composed such that the silicon-carbon composite mixture has an electrode density ranging from 0.9 g/cm³ to 1.5 g/cm³, preferably from 0.9 g/cm³ to 1.1 g/cm³ or from 1.1 g/cm³ to 1.3 g/cm³. This offers the advantage that the particles comprise better contact with each other and thus the conductivity of the resulting electrode is improved.

Especially, the silicon-carbon composite mixture, or respectively the silicon-carbon composite material, has an electrical conductivity ranging from 0.3 S/cm to 2 S/cm, or from 0.5 S/cm and 1.2 S/cm. This offers the advantage that the resistance of the electrode is reduced, thus allowing a faster reaction of the Li-ions with the silicon-carbon composite mixture. Hence, a charging speed of the lithium-ion cell may be increased.

Preferably, the silicon-carbon composite material has a silicon content in the amount of ≥ 30wt.-% to ≤ 70wt.-%, relating to the silicon-carbon composite material, more preferably ≥ 40wt.-% to ≤ 60wt.-%, more preferably ≥ 45wt.-% to ≤ 55wt.-%, for example 50wt.-%.

It may further be preferred that the silicon-carbon composite material has a carbon scaffold with pores, wherein the pores have a total pore volume of ≥ 0.5 cm³/g. Typically, the porous carbon has a pore space, also referred to as a pore volume, wherein the pore space is a group of voids (pores) in the carbon that is fillable with a gas or fluid. This embodiment on the one hand significantly may reduce weight of the anode and thus of the electrochemical energy storage device. Preferably, the pore volume is measured by gas porosymetry (gas adsorption) using nitrogen.

Preferably, the silicon-carbon composite material is present in a bimodal particle size distribution. It is particularly preferred that a first particle size Dv50 is in the range of ≥ 1 µm to < 6 µm and wherein a second particle size Dv50 is in the range of ≥ 6 µm to ≤ 20 µm.

The particle size distribution can be measured as known in the art. For example, the particle size distribution can be measured by laser light scattering of the particles in suspension, or a powder time-of-flight methodology, or other methods known in the art. The particle size distribution can be expressed as the number particle distribution or volume particle distribution, as known in the art. Accordingly, the particle size distribution can be expressed as Dvx, where D represents particle diameter, v represents the value corresponding to volume basis, and x represents the cumulative percentage of particles. For example, Dv1, Dv10, Dv50, Dv90, and Dv99 are the diameter at which 1%, 10%, 50%, 90%, and 99% of the plurality of particles in the given volume distribution reside below the named micron size. The particle size distribution is bounded by the D0 (smallest particle in the distribution) and Dv100 (maximum size of the largest particle); the Dv50 is the volume average particle size. The particle size distribution can be described in terms of one of more modes present in the particle size distribution, where the concept of mode is known in the art, for example is a maxima in the distribution. Particle size distributions can be monomodal or multimodal such as bimodal or trimodal. Modes within multimodal particle size distributions can comprise distinct local maxima within the particle distribution and/or shoulders that can be resolved from the first and/or second derivative(s) of the particle size distribution.

The present disclosure offers the advantage that the bimodal distribution of the composite enables a higher packing density and improved electrical conductivity of an anode electrode.

In a further embodiment, the bimodal silicon-carbon composite comprises at least one further carbon and/or at least one further binder. This results in the advantage that carbon increases the conductivity of the electrode and thus provides improved conductivity. The at least one further binder further supports the mechanical stability. A further carbon may be a hard carbon material or a graphitic carbon or a metal oxide. For example, the oxide containing compound is a silicon oxide (SiO₂). Alternatively, a metal oxide is a titanium oxide (TiO₂), a tin oxide (SnO₂) or other metal oxide. A hard carbon material is a non-graphitizable carbon material. A hard carbon offers the advantage that it remains amorphous at elevated temperatures (typically > 1500 °C, whereas a "soft" carbon crystallizes and becomes graphite).

In one embodiment, the at least one further carbon and/or the at least one further binder is dissolved in an aqueous medium.

In a further embodiment, the silicon-carbon composite material is a multimodal silicon-carbon composite material and the anode has a density in the range of 0.9 g/cm³ to 1.5 g/cm³, in particular between 0.9 g/cm³ and 1.1 g/cm³ or 1.1 g/cm³ and 1.3 g/cm³. This offers the advantage that the particles comprise better contact with each other and thus the conductivity of the resulting electrode is improved.

Alternatively, it may also be advantageous that the silicon-carbon composite material is present in a monomodal particle size distribution. With this regard, it may be particularly preferred that the particle size Dv50 is in the range of ≥ 7 µm to < 12 µm. This embodiment efficiently reduces or avoids side reactions, as comparably large particles have a smaller surface area.

It may further be preferred that the surface area of the silicon-carbon composite material is less than 30 m²/g. The surface area is measured according to the BET measurement which is a term for an analytical method for determining the size of surfaces, in particular porous solids, by means of gas adsorption. In a further embodiment, the BET surface area is between 4 m²/g and 25 m²/g.

This offers the advantage that the resistance of the electrode is reduced, thus allowing a faster reaction of the Li-ions with the multimodal Si-C-composite material. Hence, a charging speed of the lithium-ion cell may be further increased.

The anode may further comprise carbon black in an amount of ≥ 0.5 wt.-% to ≤ 2 wt.-%, relating to the anode. The provision of carbon black may improve the electrical properties of the anode even further. As an example, carbon black delivers superior conductivity in the anode, which in turn yields a number of performance and cost benefits for lithium-ion batteries, for example.

In a particularly preferred embodiment, the anode may comprise
- a silicon-carbon composite material in the amount of ≥ 70 wt.-% to ≤ 88 wt.-%, relating to the anode, and a silicon content in the amount of ≥ 26 wt.-% to ≤ 32 wt.-%, relating to the silicon carbide composite material;
- anisometric flake graphite in the amount of ≥ 2 wt.-% to ≤ 45 wt.-%, relating to the anode;
- carbon nanotubes in the amount of > 0 wt.-% to ≤1 wt.-%, relating to the anode;
- carbon black in the amount of ≥ 0.5 wt.-%, to ≤ 2 wt.-%, relating to the anode; and
- a binder in the amount of ≥ 0,5 wt.-% to < 6 wt.-%, preferably 0.5 wt.-% to 4 wt.-% relating to the anode.

In one further embodiment the anode electrode has a density comprising E greater than 0.01, such as greater than 0.05 or greater than 0.1 wherein E is defined as 1-(tap density for composite mixture) / (mass averaged tap density for individual fractions), wherein density is the electrode density as measured in an electrode composed of 70 wt% composite, 20 wt% graphite, and 2 wt% Super C65, and 8% PAA.

The tap density of particulate silicon-carbon composite material(s) and silicon-carbon composite mixture can be measured as known in the art. For example, tap density can be measured with a PT-TD300 Tap Density Tester, wherein a known mass of powder is loaded into a graduated cylinder, for example until filling the graduated cylinder to ½ to ¾ of its total capacity, the cylinder is loaded into the testing device, and the loaded cylinder tapped for a fixed number of taps (e.g., 250 taps) and the new tapped volume recorded, and this tapping process repeated until the point where the measured volume is no longer changing, for example within 2% of the previous reading.

In one further embodiment for the determination of E measurement of electrode properties of the silicon-carbon composite mixture and the individual fractions comprising each mode are measured under otherwise identical conditions.

The cathode may generally be formed as known in the art for lithium batteries.

According to one preferred embodiment, the cathode may comprise a layered transition metal oxide material in an amount in the range of ≥ 90 wt.-% to ≤ 100 wt.-% based on the total weight of the cathode. Preferably, the cathode further comprises carbon nanotubes in the amount of ≥ 0 wt.-% to ≤ 1 wt.-%, relating to the cathode; carbon black in the amount of ≥ 0 wt.-% to ≤ 3 wt.-%, relating to the cathode; and a binder in the amount of ≥ 0.5 wt% to ≤ 4 wt%, relating to the cathode.

According to a preferred embodiment, the layered transition metal oxide material consists of a polycrystalline layered transition metal oxide in the amount of ≥ 50 wt.-% to ≤ 100 wt.-% and single crystal layered transition metal oxide in an amount of ≥ 0 wt.-% to ≤50 wt.-%, based on the weight of the layered transition metal oxide material.

Preferably, the cathode comprises a single crystal (SC) form, a polycrystalline form (PC) or a mixture of single crystal (SC) and polycrystalline (PC) form of the layered transition metal oxide material, wherein the layered transition metal oxide material has the general formula Li₁₊ₓTM₁₋ₓO₂ with TM being selected from the group consisting of Ni, Co, Mn, Al, Zr, Ti, Nb, and W, wherein the amount of these metals is preferably as follows: Ni = 0.7 to 0.95, Co = 0.01 to 0.15, Mn = 0.01 to 0.1, Al = 0 to 0.03, Zr = 0 to 0.01, Nb, Ti, W = 0 to 0.02, wherein x is a value between 0 and 0.05. Further, in case a mixture of single crystal (SC) and polycrystalline (PC) form is present, the mixture ratio may preferably be 20 to 35 wt% SC and 65 to 80% PC.

In particular, the cathode comprises as layered transition metal oxide material lithium nickel manganese cobalt oxide, wherein the lithium nickel manganese cobalt oxide is present in a mixture of a polycrystalline form and a single crystal form. According to this embodiment, the electrochemical properties of the electrochemical energy storage device may be improved even further, in particular with regard to cycling behavior and in particular with regard to charging time.

With regard to the separator, the latter may generally as well be formed as known in the prior art. Preferably, the separator may comprise a mono-, dual- or trilayer polymer. The polymer may be selected from PE, PP, and or PET. Such a polymer may for example comprise an inorganic coating, such as Al₂O₃, AlO(OH), SiO₂, BaTiOs, MgOH₂.

It may further be preferred that the separator is laminated to the anode. This allows the advantage to improve stacking of electrodes, as the separator is already fixed on the anode electrode.

The electrolyte may comprise at least one compound selected from the group consisting of fluoroethylene carbonate, propylene carbonate, ethylene carbonate, lithium hexafluorophosphate, and lithium bis(fluorosulfonyl)imide. It could be shown that such electrolytes show superior properties when used in lithium batteries. In general, the electrolyte may comprise a mixture of LiPF₆ and LiFSI, wherein the electrolyte may be based on fluoroethylenecarbonate (FEC) based. According to one embodiment, the electrolyte my comprise of LiPF₆ and LiFSI in a combined concentration in the range of 1.0 mol/L to 2.0 mol/L, preferably 1.2 mol/L to 1.6 mol/L. It may exemplarily comprise 1 to 10 wt.-% FEC, 0 to 30 wt.-%, preferably 0 to 20 wt.-% ethylene carbonate (EC), 0 to 30 wt.-% propylene carbonate (PC), each relating to the electrolyte, and optional additional additives.

The present invention further provides the use of an anode comprising a silicon-carbon composite material and having a silicon content in the range of ≥ 9 wt.-% to ≤ 50 wt.-%, based on the total weight of the anode, in an electrochemical energy storage device, at least comprising
- the anode;
- a cathode;
- a separator disposed between the cathode and the anode; and
- an electrolyte comprising lithium ions;
wherein the electrochemical energy storage device has a ratio N/P, between an areal capacity of the anode N and an areal capacity of the cathode P, in the range of ≥ 1.1 to ≤ 1.5.

Particularly, the invention provides the use of an anode as disclosed in the context of the electrochemical energy storage device according to the present invention, in such an electrochemical energy storage device.

The present invention further provides an electrically driven vehicle, comprising an electric engine and an electrochemical energy storage device for supplying electrical energy to the electric engine, characterized in that the electrochemical energy storage device is formed like described before.

The vehicle may generally be any vehicle which is electrically driven. In particular, the electrically driven vehicle may be a fully electrically driven vehicle or a so-called hybrid vehicle. However, it may be preferred that the electrically driven vehicle is a fully electrically driven land vehicle, such as a car, a bus or a truck.

Such a vehicle comprises an electric engine and an electrochemical energy storage device for supplying electrical energy to the electric engine.

The electric engine may generally be arranged as known in the art, for example, the electrically driven engine may be a permanent synchronous machine as electric motor or an asynchronous machine as electric motor. Of course, both engines may be present and may be supplied with electrical energy from the electrochemical energy storage device. The latter is designed as defined above.

With regard to further advantages and technical features of the vehicle, it is referred to the electrochemical energy storage device as well as to the examples and the figures.

Generally, single or a plurality of features and in particular amounts of respective compounds may be transferred between single embodiments.

In the following, the invention is explained by way of example with reference to the accompanying drawing and the accompanying examples by way of preferred embodiments, wherein the features shown below may each individually or in combination constitute an aspect of the invention:
Fig. 1 shows an exemplary electrochemical storage device according to the present invention;
Fig. 2 shows a diagram relating to the capacity and thickness of an anode that may be included in the electrochemical storage device according to the present invention during the initial 15 charge/discharge cycles; and
Fig. 3 shows a diagram relating to the discharge capacity retention of electrochemical storage devices with various selected N/P ratio.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

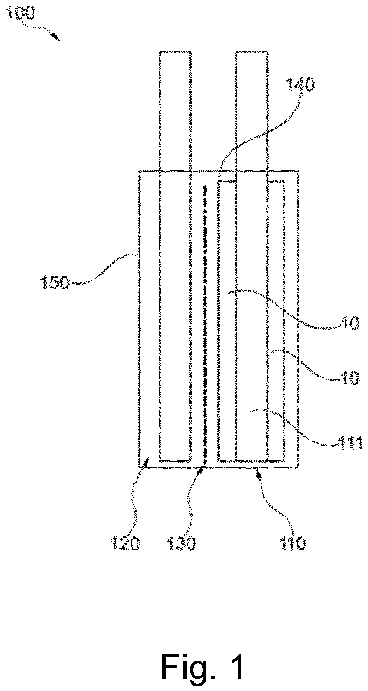

Fig. 1 shows a sectional view of an exemplary electrochemical storage device 100 with an anode 110, also called anode electrode, comprising a silicon-carbon composite material 10. The electrochemical storage device 100 is formed as a lithium-ion-battery cell. The electrochemical storage device 100 comprises at least one anode 110, at least one cathode 120 and a separator 130 disposed between the cathode 120 and the anode 110. The cathode 120 preferably comprises a transition metal oxide. Furthermore, an electrolyte 140 comprising lithium ions is provided in a cell housing 150 of the electrochemical storage device 100. The electrochemical storage device 100 can be formed as a lithium-ion-battery cell in a pouch form. Thus, the cell housing 150 may be formed as a aluminum bag. The anode 110, the cathode 120 and the separator 130 are arranged in the cell housing 150, too.

It is noted that Fig. 1 shows a simplified sectional view. The anode 110, the cathode 120 and the separator 130 are usually formed as multiple layers which are winded or folded in order to optimize packaging and in order to increase the possible surface area of the electrolyte 140. In the shown example, only one layer of the components is visible for illustrational purpose.

In the following an exemplary electrochemical energy storage device 100 is provided and the cycling behavior was examined.

According to an embodiment, the electrode may exemplarily comprise the following components in the following amounts in its anode layer which is to be provided on a current collector, see table 1.

**TABLE 1**

| **Component** | **Amount in [wt.-%] relating to anode** | **Solid content of the component amount in [wt.-%]** |
|---|---|---|
| Si/C - composite material | 83,385 | 100 |
| graphite (SFG6L) | 11,265 | 100 |
| Carbon black | 1,25 | 100 |
| CMC | 1,05 | 2 |
| CNTs | 0,1 | 0,4 |
| CMC in CNT | 0,15 | 0,6 |
| SBR | 2,8 | 48 |
| **Sum** | **100** | |

With regard to table 1, the solid content comprises the pure solid material potentially together with a solvent. Further,
With regard to column 1, the following components were used:
Silicon carbide composite material: see 55 by Group 14
Graphite: SFG6L from Imerys
Binder: Carboxymethyl cellulose
SBR Styrene Butadien rubber
Carbon black: C45 by MSE Supplies
CMC in CNT: CMC is included in the CNT Dispersion

Given the compounds as outlined in table 1, an electrode was formed as follows: Carbon black was dry mixed with graphite for 30 seconds with a stirrer by using 300 rpm. Then, a solution of 2 wt.-% binder in water and CNT was subsequently added and it was stirred at 2000rpm for 15 minutes after addition of binder and 15 minutes after addition of CNTs. A solution of SBR was then added and it was stirred for 2 minutes at 500 rpm. The formed mixture was then doctor bladed on a current collector arranged as copper foil with a thickness of 50 µm wet film thickness and it was dried at the air at room temperature for 20 minutes and in an oven at 60 °C for 30 minutes. After drying the coating, it was calendared until the coating had a density of 1,0 g/cm³.

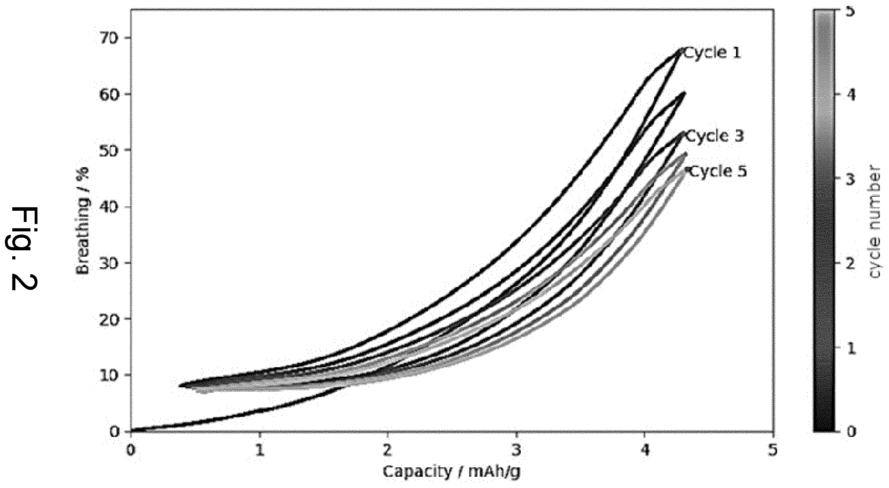

Figure 2 shows a diagram relating to the discharge capacity and breathing of the anode as described with reference to Fig. 1 and Table 1 that may be included in the electrochemical storage device according to the present invention during the initial 5 charge/discharge cycles.

For this, anodes have been tested in a dilatometer (ECD-4, El-Cell) against a lithium metal electrode in a half-cell setup. The anode have been cycled between 1.2- 0.005 V vs. Li⁺/Li at 25 °C and a C-rate of C/10 (Charge: CCCV, CV step until C/100; Discharge: CC).

It can be see that during initial cycles the maximum capacity is higher and the anode thickness increases comparably stronger with corresponding charge/capacity. After about 5 cycles, the breathing of the anode settles. The resulting breathing behavior shows that the thickness increases comparably strong at higher capacity, wherein only a small dependency is observed for lower capacities. Without being bound to a theory, electrochemical storage devices with the anode and N/P ratio according to the present invention reduce the breathing of the device significantly, which in turn may yield a significant increase in discharge capacity retention.

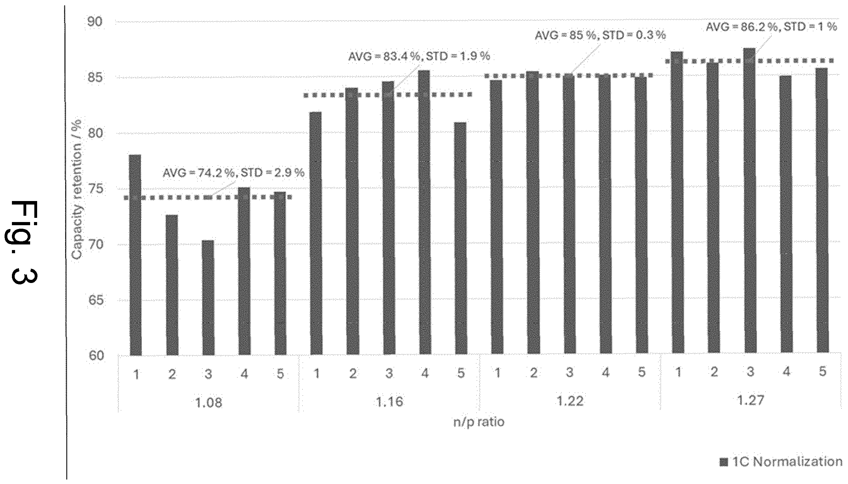

Figure 3 shows a diagram relating to the discharge capacity retention of electrochemical storage devices with various selected N/P ratio.

For this electrodes as described with reference to Figure 1 and Table 1 have been tested in Single-Layer Pouch Cells. Single-side coated electrodes have been assembled to a battery cell, separated by on layer of separator. Cells have been cycled between 2.5V - 4.2V at 25°C and C-Rate of 1C (Charge: CCCV, Discharge: CC), including an RPT (Reference parameter test) every 45 cycles. The RPT comprises 2 cycles at C/10 , 2 cycles at C/3 and 1 HPPC (Hybrid Pulse Power Characterization) cycle.

The diagram in Figure 3 refers to the discharge capacity retention at 403 cycles. It can be seen that it is only at about 74% for an N/P ratio below 1.1, wherein the retention at a ratio higher than 1.1 is at about 83-86%.

## Claims

1. Electrochemical energy storage device (100), at least comprising
- an anode (110);
- a cathode (120);
- a separator (130) disposed between the cathode (120) and the anode (110); and
- an electrolyte (140) comprising lithium ions;
wherein the anode (110) comprises a silicon-carbon composite material (10);
**characterized in that**,
the anode (110) has a silicon content in the range of ≥ 9 wt.-% to ≤ 50 wt.-%, based on the total weight of the anode (110); and the electrochemical energy storage device (100) has a ratio N/P, between an areal capacity of the anode (110) N and an areal capacity of the cathode (120) P, in the range of ≥ 1.1 to ≤ 1.5.

2. Electrochemical energy storage device (100) according to claim 1, wherein the ratio N/P is in the range of ≥ 1.12 to ≤ 1.45, preferably ≥ 1.16 to ≤ 1.40, more preferably ≥ 1.18 to ≤ 1.35, more preferably ≥ 1.2 to ≤ 1.3, more preferably ≥ 1.22 to ≤ 1.28, and more preferably ≥ 1.24 to ≤ 1.26.

3. Electrochemical energy storage device (100) according to claim 1 or 2, wherein the anode (110) has a silicon content in the range of ≥ 10 wt.-% to ≤ 49 wt.-%, preferably ≥ 15 wt.-% to ≤ 48 wt.-%, more preferably ≥ 20 wt.-% to ≤ 47 wt.-%, more preferably ≥ 25 wt.-% to ≤ 46 wt.-%, more preferably ≥ 30 wt.-% to ≤ 42 wt.-%, more preferably ≥ 35 wt.-% to ≤ 40 wt.-%.

4. Electrochemical energy storage device (100) according to any one of claim 1 to 3, wherein the electrochemical energy storage device (100) is configured so that at 100% state of charge SOC of the electrochemical energy storage device (100), the anode (110) has a charge capacity in the range of ≥ 50 % to ≤ 100 % of its maximum charge capacity (anode usage), preferably in the range of ≥ 55 % to ≤ 95 %, more preferably ≥ 60 % to ≤ 90 %, more preferably ≥ 65 % to ≤ 85 %, and more preferably ≥ 70 % to ≤ 80 %.

5. Electrochemical energy storage device (100) according to any one of claims 1 to 4, wherein the anode (110) comprises graphite, in particular anisometric flake graphite, in the amount of ≥ 2 wt.-% to ≤ 45 wt.-%, relating to the anode, carbon nanotubes in the amount of > 0 wt.-% to < 1 wt.-%, relating to the anode (110); and a binder, in particular a polymer binder, in the amount of 0.5 wt.-% to 6 wt.-%, relating to the anode.

6. Electrochemical energy storage device (100) according to any one of claims 1 to 5, wherein the anode (110) comprises the silicon-carbon composite material (10) in an amount in the range of ≥ 20 wt.-% to ≤ 98 wt.-%, relating to the anode, preferably ≥ 30 wt.-% to ≤ 98 wt.-%, more preferably ≥ 40 wt.-% to ≤ 97 wt.-%, more preferably ≥ 45 wt.-% to ≤ 96 wt.-%, more preferably ≥ 61 to ≤ 90% wt.-%, more preferably ≥ 70 wt.-% to ≤ 88 wt.-%, more preferably ≥ 75 wt.-% to ≤ 86 wt.-%, and more preferably in the range of ≥ 77 wt.-% to ≤ 85 wt.-%.

7. Electrochemical energy storage device (100) according to any one of claims 1 to 6, wherein the silicon-carbon composite material (10) is a multimodal silicon-carbon composite material (10) and the anode (110) has a density in the range of 0.9 g/cm³ to 1.5 g/cm³, in particular between 0.9 g/cm³ and 1.1 g/cm³ or 1.1 g/cm³ and 1.3 g/cm³.

8. Electrochemical energy storage device (100) according to any one of claims 1 to 7, wherein the cathode (120) comprises a layered transition metal oxide material in an amount in the range of ≥ 90 wt.-% to ≤ 100 wt.-% based on the total weight of the cathode (120).

9. Electrochemical energy storage device (100) according to claim 8, wherein the cathode (120) further comprises carbon nanotubes in the amount of ≥ 0 wt.-% to ≤ 1 wt.-%, relating to the cathode (120); carbon black in the amount of ≥ 0 wt.-% to ≤ 3 wt.-%, relating to the cathode (120); and a binder in the amount of ≥ 0.5 wt% to ≤ 4 wt%, relating to the cathode (120).

10. Electrochemical energy storage device (100) according to any one of claims 8 or 9, wherein the cathode (120) comprises a single crystal (SC) form, a polycrystalline form (PC) or a mixture of single crystal (SC) and polycrystalline (PC) form of the layered transition metal oxide material, wherein the layered transition metal oxide material has the general formula Li₁₊ₓTM₁₋ₓO₂ with TM being selected from the group consisting of Ni, Co, Mn, Al, Zr, Ti, Nb, and W, wherein x is a value between 0 and 0.05.

11. Electrochemical energy storage device (100) according to any one of claims wherein the cathode (120) comprises as layered transition metal oxide material lithium nickel manganese cobalt oxide, wherein the lithium nickel manganese cobalt oxide is present in a mixture of a polycrystalline form and a single crystal form.

12. Electrochemical energy storage device (100) according to any one of claims 1 to 11, wherein the separator (130) comprise a trilayer polymer, preferably comprising an inorganic coating, preferably a coating of Al₂O₃ or BaTiOs.

13. Electrochemical energy storage device (100) according to any one of claims 1 to 12, wherein the electrolyte (140) comprises at least one compound selected from the group consisting of fluoroethylene carbonate, propylene carbonate, ethylene carbonate, lithium hexafluorophosphate, and lithium bis(fluorosulfonyl)imide.

14. Use of an anode (110) comprising a silicon-carbon composite material (10) and having a silicon content in the range of ≥ 9 wt.-% to ≤ 50 wt.-%, based on the total weight of the anode (110), in an electrochemical energy storage device (100), at least comprising
- the anode (110);
- a cathode (120);
- a separator (130) disposed between the cathode and the anode; and
- an electrolyte (140) comprising lithium ions;
wherein the electrochemical energy storage device (100) has a ratio N/P, between an areal capacity of the anode (110) N and an areal capacity of the cathode (120) P, in the range of ≥ 1.1 to ≤ 1.5.

15. Electrically driven vehicle, comprising an electric engine and an electrochemical energy storage device (100) according to any one of claims 1 to 13 for supplying electrical energy to the electric engine.
